# EUROPÄISCHE PATENTANMELDUNG

(11) **EP 1 800 781 A2**
(43) Veröffentlichungstag der Anmeldung: **27.06.2007**
(21) Anmeldenummer: 06026829.9
(22) Anmeldetag: 22.12.2006
(51) Int. Cl.: B23D 35/00, B23D 15/04

(54) **Matrizenelement und Schneideeinheit für eine Schlagschneidevorrichtung**

(30) Priorität: 22.12.2005 DE 102005061600
(71) Anmelder: Schuster, Helmut, 86920 Denklingen (DE)
(72) Erfinder: Schuster, Helmut, 86920 Denklingen (DE)
(74) Vertreter: Mollekopf, Gerd Willi

(57) **Zusammenfassung**

Die Erfindung betrifft ein Matrizenelement (5, 7) für eine Schneideeinheit (1) einer ScMagschneidevorrichtung. Das Matrizenelement umfasst ein Außenelement (21, 25) und ein Innenelement (23, 27). Erfindungsgemäß ist das Innenelement umlaufend geschlossen und durch das Außenelement permanent geklemmt. Bei einer Schneideeinheit (1) für eine Schlagschneidevorrichtung mit zumindest zwei Matrizenelementen (5, 7) zum Aufnehmen eines zu trennenden Werkstücks (50) ist zumindest eines der Matrizenelemente (7) relativ zum anderen Matrizenelement (5) beweglich gelagert und zumindest eines der Matrizenelemente zumindest zweiteilig aus einem Außenelement und einem darin gefassten Innenelement ausgebildet.

## Beschreibung

Die Erfindung betrifft ein Matrizenelement für eine Schneideeinheit, eine Schneideeinheit mit zumindest einem Matrizenelement für eine Schlagschneidevorrichtung zum Trennen von Werkstücken, sowie eine Schlagschneidevorrichtung mit einer solchen Schneideeinheit.

Beim Hochgeschwindigkeits-Schlagschneiden wird ein hoher Impuls auf eine bewegliche Matrize übertragen, die durch den Impuls lateral gegen eine starre Matrize verschoben wird. Zwischen den Matrizen ist in einem Durchgang durch die Matrizen ein Werkstück eingespannt. Die Beobachtungen zeigen, dass das zu schneidende Werkstück bei sehr kurz, aber heftig einwirkendem Impuls nahezu ohne plastische Verformung trennbar ist. Dabei wird die verschiebbare Matrize lediglich um wenige zehntel Millimeter gegenüber der starren Matrize versetzt. Problematisch ist hierbei die enorme Impulsenergie, die in äußerst kurzer Zeit auf eine Schneideeinheit und die darin gehaltenen Matrizen einwirkt. Durch die Impulsenergie werden einerseits die verschiebbare Matrize und das darin gefasste Werkstück schlagartig beschleunigt und andererseits wirkt das der Trennung unterliegende Werkstück sowohl auf die feste als auch auf die bewegliche Matrize zurück.

In der EP 1 520 649 A2 hat der Anmelder bereits verschiedene Ausführungen von Schneideeinheiten für eine dort auch offenbarte Schlagschneidevorrichtung vorgeschlagen. In der Grundform wird eine Schneideeinheit mit einteilig ausgebildeten Matrizen vorgeschlagen, wobei eine Dämpfungseinrichtung die überschüssige Energie der beweglichen Matrize effizient aufnimmt. Bei Ausgestaltungen der dortigen Matrizen sind mehrteilige Matrizen mit veränderbarem Querschnitt zur Verbesserung der Klemmung des zu trennenden Werkstücks beim Schlag vorgeschlagen.

Es ist Aufgabe der Erfindung, ein Matrizenelement für eine Schneideeinheit, eine Schneideeinheit mit einem Matrizenelement und eine Schlagschneidevorrichtung mit einer Schneideeinheit vorzusehen, bei denen die Standzeit wesentlich erhöht ist. Weiterhin ist es eine Aufgabe, die Präzision der Trennfläche bei einem getrennten Werkstück zu erhöhen.

Diese Aufgabe wird mit den Merkmalen des Anspruchs 1, 14, 15, 17, bzw. 26 gelöst. Vorteilhafte Ausgestaltungen sind Gegenstand der Unteransprüche.

Mit der aus der oben zitierten EP 1 520 649 A2 bekannten Schlagschneidevorrichtung ergibt sich für Schlagschneider ein ganz neuer Anwendungsbereich, bei dem Stangenmaterial mit einem Querschnitt bis 50 mm und mehr mittels eines Schlagimpulses trennbar sind. Es hat sich herausgestellt, dass das Schlagergebnis, d.h. die Formerhaltung des getrennten Werkstücks und die Ebenheit und Rechtwinkligkeit der Trennfläche bezüglich der Werkstückachse, um so besser wird, je härter das zu trennende Stangenmaterial ist. Mit dem Durchmesser und der Härte des zu trennenden Materials erhöht sich aber auch die erforderliche Trennimpulsenergie und damit die Materialbelastung für die Schneideeinheit und die darin eingesetzten Matrizen. Mit der Anzahl der ausgeführten Schläge tritt bei sowohl der starren als auch bei der beweglichen Matrize eine allmähliche Materialermüdung auf, die zu einem Bruch führen kann, beispielsweise nach der Ausführung von 10.000 Schlägen bzw. Trennvorgängen. Um den Transportvorschub des zu trennenden Stangenmaterials zu ermöglichen, muss der Querschnitt einer einteiligen Matrize ein Spiel aufweisen, um auch bei Durchmesservariationen des Stangenmaterials einen einwandfreien Vorschub zum Weitertransport des Stangenmaterials zwischen den Trennvorgängen zu gewährleisten. Aufgrund des Spiels kommt es während des Schlagvorgangs zu einem Kippen des Stangenmaterials innerhalb der Aufnahmedurchgänge in den Matrizen, wodurch unsymmetrische Verschleißerscheinungen an den Matrizen aufgrund von Bewegungen und Schleifspuren durch das Stangenmaterial auftritt. Zusätzlich wird beobachtet, dass materialabhängig (Stangenmaterial und Matrizenmaterial) und durchmesserabhängig durch das Kippen des Stangenmaterials eine Winkelabweichung zwischen der gewünschten Trennflächenebene und der tatsächlichen Trennflächenebene auftritt. Mit der unten beschriebenen Weiterbildung eines Matrizenelements und dessen Verwendung bei einer Schneideeinheit werden Lösungen zur Behebung eines oder mehrerer dieser Nachteile vorgeschlagen.

Gemäß Anspruch 1 ist ein Matrizenelement zumindest zweiteilig ausgebildet, wobei in ein Außenelement bzw. in eine Fassung zumindest ein Innenelement eingesetzt ist, das eine umlaufend geschlossene Wandung aufweist. D.h. das Innenelement ist einstückig ausgebildet. Vorteilhaft ist das Außenelement ebenfalls einstückig und ohne durchgehende axiale Unterbrechung ausgebildet. Ganz besonders vorteilhaft klemmt das Außenelement das Innenelement permanent, d.h. über die gesamte Einsatzdauer des Matrizenelements wird die Klemmung beibehalten und auch nicht zeitweise unterbrochen. Somit bleibt der Querschnitt des Öffnungsdurchgangs, der durch das Matrizenelement führt und der Aufnahme des zu trennenden Werkstücks dient, unverändert (zumindest soweit keine Verschleißerscheinungen auftreten).

Bevorzugt bilden das Außenelement und das zumindest eine Innenelement einen Pressverbund, insbesondere einen Schrumpfverband bzw. Schrumpfverbund. Bei einer ganz besonders vorteilhaften Ausgestaltung ist das zumindest eine Innenelement mittels Schrumpfung im Außenelement gefasst. Dabei ist entweder das Außenelement auf das Innenelement geschrumpft oder das Innenelement im geschrumpften Zustand in das Außenelement eingesetzt und presst sich in das Außenelement während der Ausdehnung ein. Oder bei der Herstellung eines Schrumpfverbandes zwischen dem zumindest einen Innenelement und dem Außenelement kommt es zu gegenläufigen Schrumpfungs- und Ausdehnungsvorgängen, wobei das Außenelement schrumpft und das Innenelement sich ausdehnt.

Durch das Ausbilden eines Pressverbandes wird die radiale Druckfestigkeit des Matrizenelements um ein mehrfaches gegenüber einem vollen Material erhöht. Damit steigt die Standfestigkeit des Matrizenelements gegenüber einem Matrizenelement aus einem vollen Material um ein Vielfaches an. Eine Zerstörung des Matrizenelements mit einem solchen Pressverband konnte nach Ausführung von 100.000 Schlägen noch nicht festgestellt werden, während beispielsweise ein Matrizenelement bei gleichem Material des Außenelements und des vollen Matrizenelements bereits nach 10.000 Schlägen einen Defekt aufwies, der eine Weiternutzung verhindert.

Die radiale Schrumpfung, d.h. der Zustand des Bauteils im nichteingeschrumpften Zustand gegenüber dem Zustand, in dem das Bauteil den Pressverband bildet, liegt vorteilhaft im Bereich von 0,02 mm bis 0,5 mm, bevorzugt im Bereich von 0,5 mm bis 0,3 mm, und besonders bevorzugt im Bereich von 0,1 mm bis 0,2 mm. Bezogen auf die Wandstärke, beispielsweise des Innenelements, beträgt die Schrumpfung vorteilhaft 1/10 bis 1/1000 der Wandstärke, bevorzugt 1/30 bis 1/200 und liegt besonders vorteilhaft bei ungefähr 1/100 der Wandstärke.

Werden mehrere Innenelemente schalenartig ineinander gesetzt, so können diese jeweils untereinander einen Pressverband bilden oder das innerste Innenelement bezüglich des Außenelements. Vorteilhaft bilden jedoch die mehreren Innenelemente zueinander wiederum einen Pressverband, wobei beispielsweise gegenüber dem Außenelement, in dem bereits ein Innenelement mittels Pressverband oder Schrumpfverbindung eingesetzt ist, ein abgekühltes weiteres Innenelement eingesetzt wird und dort durch Ausdehnung einen Pressverband ausbildet.

Gemäß einer vorteilhaften Ausgestaltung sind die Materialien des Außenelements und des Innenelements verschieden, beispielsweise hat das Außenelement eine hohe Schallgeschwindigkeit und/oder Zugfestigkeit, um den Schlagimpuls verzögerungsfrei in Richtung zu trennendes Werkstück zu übertragen und/oder einen hohen Druck auf das Innenelement aufzubauen, während das Innenelement eine hohe Härte aufweist, um Verschleißerscheinungen durch Stöße und Verschiebungen des zu trennenden Werkstücks zu minimieren.

Ist das Innenelement konisch ausgebildet, so wird beispielsweise das Einführen des Innenelements während der Ausbildung des Schrumpfverbandes erleichtert. Weiterhin ist die Materialbelastung der Matrize im Bereich der Trennfläche (Anlagefläche zwischen beweglichen und starren Matrizenelement) erhöht, so dass dort durch die axial unterschiedliche Wandstärke des Innenelements den in axiale Richtung unterschiedlich auftretenden Kräften während des Schlagvorgangs entsprechend entgegengewirkt wird. Beispielsweise kann ein verdickter Bereich des Innenelements im Anschluss an die Trennfläche einerseits eine erhöhte Standzeit bewirken, wobei zusätzlich durch die am Konus schräg verlaufende Grenzfläche zwischen Außen- und Innenelement eine Kraftverstärkung in Richtung Trennkante erreicht wird.

Gemäß einer weiteren Ausgestaltung ist umlaufend um das Innenelement am Innenelement und/oder am Außenelement eine Nut ausgebildet, in die ein Druckmedium einleitbar ist. Besonders in Verbindung mit der konischen Ausgestaltung des Innenelements kann durch Beaufschlagung der Nut mit extrem hohem Druck das Innenelement gegen die Presspassung aus dem Außenelement herausgedrückt werden. Durch die Herausnehmbarkeit des Innenelements aus dem Außenelement kann das Innenelement entweder ausgetauscht oder aufgearbeitet werden, beispielsweise durch Nachschleifen von Seitenflächen oder Fasen am Innenelement.

Gemäß einer vorteilhaften Ausgestaltung ist die Wandstärke des zumindest einen Innenelements unterschiedlich stark. Durch die unterschiedliche Wandstärke des Innenelements ändert sich auch in Umfangsrichtung die Kraftverteilung der Presspassung, so dass an den Stellen der Innenfläche des Innenelements, an denen während der Schlagphase z.B. besonders hohe Scherkräfte auftreten, erhöhte Gegenkräfte bereitgestellt werden können. Beispielsweise treten bei dem beweglichen Matrizenelement an der Oberseite (die der Auftrefffläche für das Schlagelement am nächsten gelegene Innenfläche des Innenelements) wesentlich höhere Belastungen auf als an dessen Unterseite. Umgekehrt treten beim starren Matrizenelement an der Unterseite des Innenelements erhöhte Belastungen auf. Durch Verdickungen in den entsprechenden Bereichen wird dort die Wirkung der Presspassung erhöht.

Werden bei der Verwendung des Matrizenelements besonders kurze Werkstücke durch die Trennung erzeugt, so wird durch Vorsehen einer Aufweitung im Auswurfbereich des Innenelements das Herausfallen des abgetrennten Werkstücks aus dem Matrizenelement begünstigt.

Vorteilhaft sind zur weiteren Erhöhung der Verschleißfestigkeit mehrere Innenelemente in ein Außenelement eingesetzt. Wie oben bereits erwähnt, können diese gegenseitig einen Pressverband bilden oder erst im zusammengesetzten Zustand ausgewählte Innenelemente mit anderen Innenelementen oder dem Außenelement eine Presspassung bilden. In Ausgestaltung sind die Materialien der Innenelemente, zumindest von zwei Innenelementen, unterschiedlich, so dass durch geeignete Auswahl der Materialen in Mehrschicht-Bauweise (senkrecht zur Innenwand) Materialien mit unterschiedlichen Eigenschaften aufeinander zu liegen kommen und durch die Paarung der Materialeigenschaften sich eine Gesamteigenschaft des zusammengesetzten Innenelements ergibt, die bei Verwendung nur eines Materials nicht realisierbar ist. Beispielsweise werden unterschiedliche Gradienten der Spannungsabnahme von außen nach innen aufgebaut oder es werden durch unterschiedliche Elastizitäts- oder Schallausdehnungseigenschaften erhöhte Festigkeiten in Belastungsspitzenpunkten an der Innenseite des innersten Innenelements aufgefangen.

Gemäß Anspruch 14 bilden ein Außenelement und zumindest ein Innenelement eines Matrizenelements eine Schrumpfpassung aus. Die Vorteile der Schrumpfpassung bzw. des Schrumpfverbandes wurden bereits oben erwähnt, wobei hier auch ein Innenelement bestehend aus mehreren Segmenten zum Einsatz kommen kann. Die Ausgestaltung des Innenelements und/oder des Außenelements erfolgt vorteilhaft gemäß einem der Ansprüche 3 bis 13.

Bei der Schneideeinheit gemäß Anspruch 15 ist zumindest eines der eingesetzten Matrizenelemente gemäß den obigen Ausführungen ausgestaltet. Ganz besonders vorteilhaft sind sowohl das bewegliche Matrizenelement als auch das eine oder die mehreren starren Matrizenelemente gemäß einer der obigen Ausführungen ausgestaltet. Während des Schlagvorgangs kommt es sowohl bei der bewegten als auch bei dem starren Matrizenelement zu nahezu symmetrisch wirkenden Kräften, die das zu trennende Stangenmaterial auf beide Matrizenelemente ausübt. Daher wird die Standzeit der Schneideeinheit durch Verwendung von Matrizenelementen, die jeweils eine erhöhte Standzeit aufweisen, insgesamt erhöht. Selbstverständlich kann das zumindest eine starre Matrizenelement integraler Bestandteil der Schneideeinheit sein.

Bei der Schneideeinheit gemäß Anspruch 17 sind die Matrizenelemente und die Längsachse des Durchgangs durch die Matrizenelemente, durch den das zu trennende Stangenmaterial gefördert wird, nicht senkrecht zueinander ausgebildet. D.h., die Verschiebungsrichtung des beweglichen Matrizenelements steht nicht unter 90° zur Achse des Durchgangs für das zu trennende Werkstück. Wie oben beschrieben, tritt während des Schlagvorgangs eine Kippung des zu trennenden Stangenmaterials innerhalb der Durchgänge aufgrund von Toleranzen auf. Dieses Kippen kann dazu führen, dass die Trennfläche am getrennten Werkstück nicht senkrecht zur ursprünglichen Werkstückachse ist, sondern geneigt dazu verläuft. Dieser Neigungswinkel ist üblicherweise sehr gering, führt jedoch zu vermeidbarem Materialverlust und Nachbearbeitungsaufwand, da die Schräge normalerweise plan gedreht werden muss. Dadurch, dass die Achse des Durchgangs durch zumindest eines der Matrizenelemente, vorzugsweise durch alle Matrizenelemente, unter einem Winkel zum Lot auf die Verschiebungsrichtung (Verschiebungsfläche) der beweglichen Matrize steht, wird das Entstehen einer schrägen Trennfläche vermieden. Es ist selbstverständlich, dass der erforderliche Neigungswinkel sowohl von der Stärke des Stangenmaterials, von der Art des verwendeten Stangenmaterials, vom Spiel des Stangenmaterials innerhalb der Durchgänge und dem Material zumindest an der Innenseite des Matrizenelements oder der Matrizenelemente abhängig ist. Somit ist der exakte Winkel der Neigung unter Berücksichtigung all dieser Faktoren festzulegen. Bei üblichen Materialdurchmessern und Materialarten, bei denen eine Schlagtrennung in Frage kommt, liegt der Winkel der Neigung im Bereich von 0,05° bis 5°.

Bei einer besonders vorteilhaften Ausgestaltung ist die Schneideeinheit derart ausgebildet, dass die Verschiebungsfläche des beweglichen Matrizenelements gegenüber dem festen bzw. starren Matrizenelement geneigt ist. Alternativ oder zusätzlich ist die Achse der Durchgänge oder zumindest eines der Durchgänge durch die Matrizenelemente gegenüber der Senkrechten der Verschiebungsrichtung des beweglichen Matrizenelements geneigt. In beiden Fällen oder bei Kombination von beiden Ausgestaltungen (Neigungswinkel kann aufgeteilt werden zwischen Schrägstellung des Durchgangs und schräger Verschiebung des beweglichen Matrizenelements) wird die Kippung des Stangenmaterials während des Schlagvorgangs kompensiert und eine senkrecht zur Materialachse verlaufende Trennebene erzielt.

Ganz besonders vorteilhaft kommt bei einer Schneideeinheit zum Erzeugen senkrechter Trennflächen (zumindest in einer Richtung senkrecht - siehe unten) ein oder mehrere Matrizenelemente nach den Ansprüchen 1 bis 14 zum Einsatz, um auch hier die Standzeit deutlich zu erhöhen.

Es ist selbstverständlich, dass sowohl eine Kompensation der Schrägstellung bzw. des Kippens als auch die Erhöhung der Standzeiten durch die oben beschriebenen Maßnahmen auch beim Trennen von Material entsprechend einsetzbar sind, bei dem keine ebene Trennfläche sondern eine gebogene Trennfläche erzeugt wird. Beispielsweise wenn die Trennfläche gebogen ist, gezackt ist, gewellt ist, ein Ausschnitt aus einer Zylinderfläche ist oder dergleichen.

Anhand von Figuren werden Ausführungsformen der Erfindung näher erläutert. Es zeigen:
- Fig. 1: einen Querschnitt durch einen Matrizenblock mit einer starren und einer beweglichen Matrize,
- Fig. 2: einen Querschnitt senkrecht zur Fig. 1 durch die starre Matrize,
- Fig. 3A: einen Querschnitt durch eine Ausgestaltung der starren Matrize,
- Fig. 3B: eine Anordnung der starren Matrize von Fig. 3A und einer Ausführung der beweglichen Matrize mit darin befindlichem Stangenmaterial während des Trennvorgangs,
- Fig. 4: eine Anordnung einer weiteren Ausführungsform einer starren und beweglichen Matrize,
- Fig. 4A und 4B: Erläuterungen und Ausgestaltungen zur Anordnung von Fig. 4,
- Fig. 5: eine Matrize mit mehrschaligen Innenelementen,
- Fig. 6: ein Matrizenelement mit einem Innenelement unterschiedlicher Wandstärke,
- Fig. 7: ein Matrizenelement für U-förmiges Stangenmaterial,
- Fig. 8: eine Matrize mit mehrfach symmetrischer Außenform zur Verwendung in unterschiedlichen Einbaulagen,
- Fig. 9: Teilansichten einer Schlagschneidemaschine mit einem Matrizenblock in weiterer Ausgestaltung.

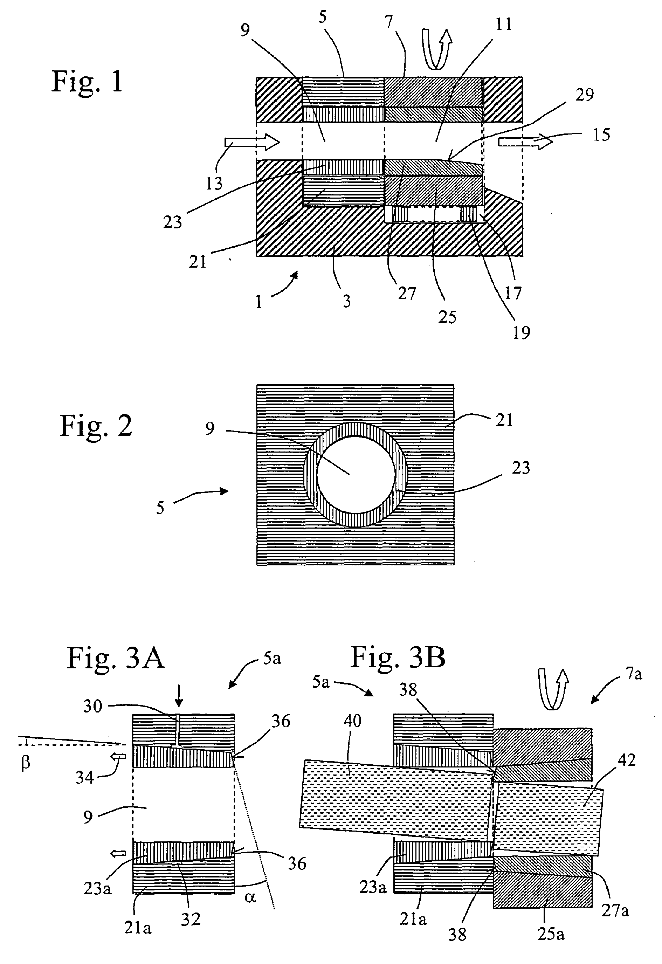

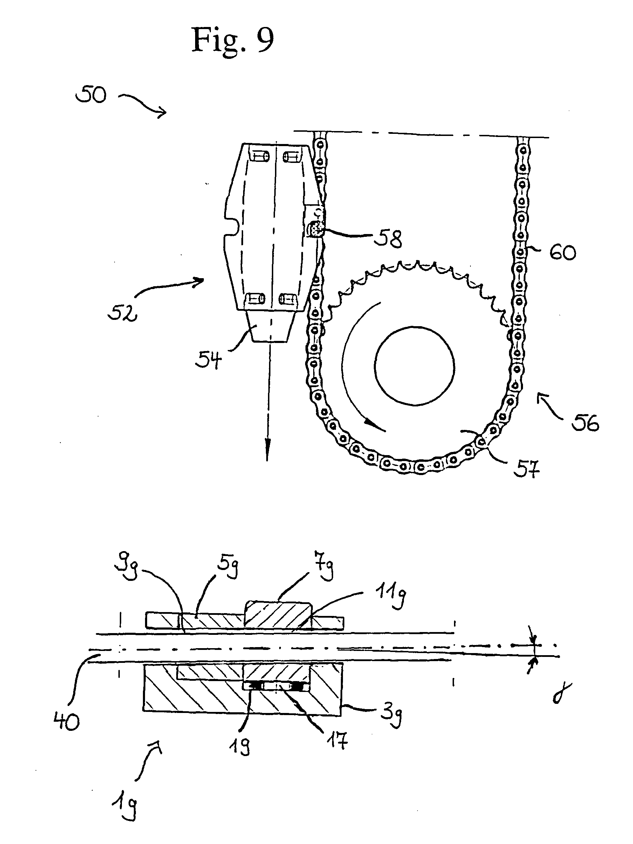

Fig. 1 zeigt einen Querschnitt durch einen Matrizenblock 1 längs der Vorschubachse für ein Stangenmaterial, das zum Trennen mittels des Matrizenblocks 1 sukzessive durch den Matrizenblock geschoben wird. Nähere Einzelheiten zu dem Trennvorgang und einer Schlagschneidevorrichtung, die ein Schlagelement gegen eine bewegliche Matrize 7 des Matrizenblocks 1 beschleunigt - siehe auch die EP 1 520 649 A2 sowie die Darstellung in Fig. 9.

In einem Werkzeughalter 3 des Matrizenblocks 1 sind eine starre Matrize 5 und die bewegliche Matrize 7 gehalten. Durch die starre Matrize 5 verläuft ein erster Durchgang 9. Ein zweiter Durchgang 11 verläuft durch die bewegliche Matrize 7, der im Ausgangszustand der Matrize 7 koaxial zum Durchgang 9 ist. Ein zu trennendes Stangenmaterial 40 wird durch die Eintrittsseite 13 in den Matrizenblock 1 eingeschoben und das getrennte Material 42 wird auf einer Austrittsseite 15 ausgeworfen. Die dargestellte Förderrichtung bezüglich starrer und beweglicher Matrize 5, 7 ist die bevorzugte Förderrichtung, sie kann jedoch auch umgekehrt von Seiten der beweglichen Matrize 7 her erfolgen.

Die starre Matrize 5 liegt auf einer Fläche des Werkzeughalters 3 auf, während sich unterhalb der beweglichen Matrize 5 eine Vertiefung 17 anschließt, in der ein Dämpfungselement 19 angeordnet ist, auf dem die bewegliche Matrize 7 lagert. Bezüglich der Ausgestaltung des Dämpfungselements 19 wird wiederum auf die EP 1 520 649 A2 verwiesen.

Die starre Matrize 5 ist im dargestellten Beispiel zweiteilig aus einer ersten Fassung 21 und einer darin angeordneten ersten Hülse 23 ausgebildet. Die erste Fassung 21 und die erste Hülse 23 bilden untereinander eine Schrumpfpassung bzw. einen Schrumpfverband, was eine wesentlich erhöhte Druckbelastbarkeit an der Innenseite der ersten Hülse ergibt im Vergleich zu einer Matrize, die einteilig aus einem massiven Material ausgebildet ist. Durch die Schrumpfpassung, die auch bei allen nachfolgenden Ausführungen sowohl der starren als auch der beweglichen Matrize verwendet wird, wird die Standzeit der Matrizen um mindestens den Faktor 10 erhöht. Entsprechend ist die bewegliche Matrize 7 zweiteilig aus einer zweiten Fassung 25 und einer darin eingesetzten zweiten Hülse 27 ausgebildet.

Wie in Fig. 1 durch den gebogenen Pfeil dargestellt, führt ein Schlagelement (siehe Hammer 54 in Fig. 9) einen Schlag auf die Oberseite der beweglichen Matrize 7 aus, die sich aufgrund des Schlages eine sehr kurze Strecke nach unten bewegt und dort durch die Reibfeder 19 abgebremst wird. Während dieser kurzen Auslenkung der beweglichen Matrize 7 gegenüber der starren Matrize 5 wird ein in den Durchgängen 9, 11 gefasstes Werkstück 40 getrennt. Das abgetrennte Werkstück 42 (vergleiche Fig. 3B) gleitet aufgrund einer nach unten verlaufenden Auswurfbahn 29, die an der beweglichen Matrize 7 an der unteren Innenseite der zweiten Hülse 27 ausgebildet ist, zur Außenseite und kann dort zur weiteren Bearbeitung entnommen werden.

Fig. 2 zeigt einen Querschnitt senkrecht zur Achse des Durchgangs 9 durch die starre Matrize 5. Abgesehen von der Ausbuchtung an der Unterseite in Richtung Austrittsseite 15 entspricht der Querschnitt der beweglichen Matrize 7 dem Querschnitt der starren Matrize 5.

Fig. 3A zeigt einen Querschnitt längs der Achse des Durchgangs 9 durch eine starre Matrize 5a als Ausgestaltung der starren Matrize 5 von Fig. 1. Durch eine in der ersten Fassung 21a geführte Zufuhrleitung 30 wird ein Druckmedium zu einer am Innenumfang verlaufenden Nut 32 eingeleitet. Die Zufuhrleitung 30 kann an beliebiger Stelle der ersten Fassung 21a oder der ersten Hülse 23a verlaufen. Bei Aufbau eines genügend hohen Drucks des Druckmediums in der Umfangsnut 32 wird die erste Hülse 23a gegen den Druck der Schrumpfpassung zusammengedrückt und aufgrund der konischen Form der ersten Hülse 23a aus der ersten Fassung 21a herausgepresst. Der Außenkonus der ersten Hülse 23a kann sich wie dargestellt zu der Fläche hin erweitern, die der Schnittkante entgegengesetzt ist, oder alternativ in Richtung Schnittebene (in Fig. 3A die rechte Seite der ersten Hülse 23a) erweitern. Mit β ist der Öffnungswinkel der Außenfläche der konischen ersten Hülse 23a bezeichnet. Alternativ oder zusätzlich ist auch die bewegliche Matrize 7a (Fig. 3B) mit einer Umfangsnut 32 und einer Zufuhrleitung 30 versehen.

Weiterhin zeigt Fig. 3A eine Fase 36 bzw. Hinterschneidung der Stirnseite der ersten Hülse 23a an der Trennebene (Anlagefläche zwischen starrer und beweglicher Matrize). Die Fase hat gegenüber der Trennebene einen Winkel α. Eine entsprechende Fase 38 ist auch an der zweiten Hülse 27a der beweglichen Matrize 7a vorgesehen. Die Fase 36, 38 kann an beiden oder nur an einer der Matrizen vorgesehen sein. In weiterer, nicht dargestellter Ausgestaltung ist die Fase an der starren Matrize nur gegenüberliegend zur Schlagseite (bei Fig. 3A im unteren Bereich), anschließend an die Schnitt- bzw. Auflagekante der starren Matrize vorgesehen, und/oder an der beweglichen Matrize ist die Fase nur im Anschluss an die obere Schneide- bzw. Auflagekante der zweiten Hülse 27a vorgesehen.

Die Fase an der Stirnkante der ersten und/oder zweiten Hülse 23a, 27a verhindert ein Schleifen bzw. Reiben der Vorderkante des abgetrennten Werkstücks an den Stirnkanten: Fig. 3B zeigt die Lage der starre Matrize 5a und der beweglichen Matrize 7a während des Schlagvorgangs bei maximaler Auslenkung, bei dem das zu trennende Stangenmaterial 40 innerhalb der Durchgänge 9, 11 gekippt ist. Die Kippung des Stangenmaterials und entsprechend des abgetrennten Werkstücks 42 ist in Fig. 3B übertrieben dargestellt, ebenso wie das zur Förderung des Stangenmaterials 40 durch die Durchgänge 9, 11 notwendige Spiel zwischen Außenseite des Stangenmaterials 40 und Innenseite der Hülsen 23a, 27a. Die bewegliche Matrize 7a ist gegenüber der starren Matrize 5a maximal ausgelenkt, nachdem der Schlag ausgeführt wurde. Mit Beginn der Verschiebung der beweglichen Matrize 7a gegenüber der starren Matrize 5a nach unten, wird das Stangenmaterial 40 innerhalb der Durchgänge 9, 11 gekippt, da einerseits das Stangenmaterial 40 in den Durchgängen 9, 11 Spiel hat und andererseits sowohl das Stangenmaterial als auch das Innenmaterial der Durchgänge im Druckbereich leicht elastisch deformiert wird. Beim Abtrennen eines Werkstücks 42 vom Stangenmaterial 40 bleiben beide zunächst noch im gekippten Zustand, so dass wie in Fig. 3B dargestellt die obere rechte Kante des Stangenmaterials 40 in Richtung Stirnfläche im oberen Bereich der zweiten Hülse 27a hervorsteht. Dagegen steht das untere linke Ende des abgetrennten Werkstücks 42 in Richtung untere Stirnkante der ersten Hülse 23a hervor. Beide vorspringende Kanten würden an der Stirnkante im entsprechenden Bereich der ersten und zweiten Hülse 23a, 27a entlangschleifen und dort Verschleiß durch Deformation und Materialabrieb hervorrufen. Aufgrund der Fasen 36, 38 wird das Entlangschleifen der hervorspringenden Kanten des Stangen- und abgetrennten Materials 40, 42 an den Stirnkanten der Hülsen 23a, 27a verhindert.

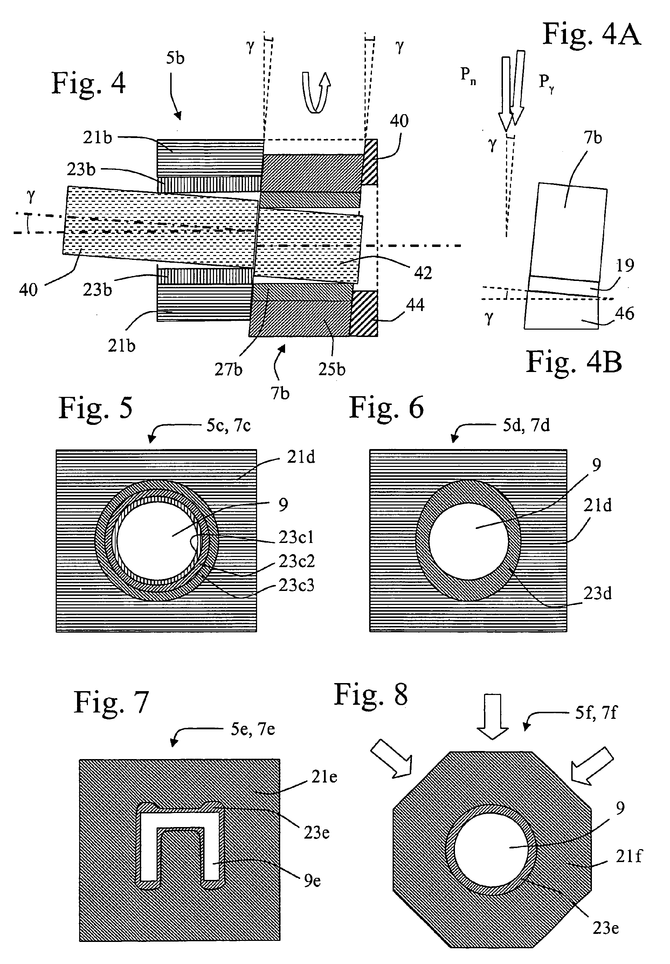

Fig. 4 zeigt einen Querschnitt durch die Anordnung einer beweglichen und starren Matrize 7b, 5b in weiterer Ausgestaltung. Bezüglich der Achsen der Durchgänge 9, 11 durch die starre und bewegliche Matrize 5b, 7b ist die Trennebene sowohl an der starren als auch an der beweglichen Matrize um den Winkel γ geneigt. Wie bereits zu Fig. 3B erläutert und auch in Fig. 4 übertrieben dargestellt, kippt das Stangenmaterial 40 innerhalb der Durchgänge 9, 11 beim Ausführen des Schlages. Da eine Übertragung des Schlagimpulses vom beweglichen Matrizenelement auf das Stangenmaterial 40 dann erfolgt, wenn das Stangenmaterial 40 bereits gekippt ist, läuft die Trennebene nicht mehr senkrecht zur Achse des Stangenmaterials 40, sondern unter einem Winkel entsprechend der Kippung (γ) des Stangenmaterials in den Durchgängen 9, 11. Indem von vornherein die Verschiebungsebene des beweglichen Matrizenelements 7b gegenüber dem starren Matrizenelements 5b bezüglich der Achse der Durchgänge 9, 11 (also nicht bezüglich des gekippten Stangenmaterials 40) gekippt ist, resultiert durch das Zusammenspielen zwischen gekippter Verschiebungsebene und gekipptem Stangenmaterial eine Trennebene des Stangenmaterials bzw. des abgetrennten Werkstücks 42, die senkrecht zur Achse des Stangenmaterials bzw. Werkstücks 42 verläuft.

Zur Unterstützung der schrägen Auslenkung der beweglichen Matrize 7b wird durch den Werkzeughalter 3 (vergleiche Fig. 1) eine Keilplatte 44 gehalten, die an der Anlageseite zur beweglichen Matrize 7b ebenfalls um den Neigungswinkel γ geneigt ist. Wie dargestellt ist die Öffnungsweite der Austrittseite des Keils größer als die Öffnungsweite des zweiten Durchgangs 11, so dass auch im ausgelenkten Zustand der beweglichen Matrize 7b das abgetrennte Werkstück 42 ausgeworfen werden kann. In Ausgestaltung ist anstelle der Keilplatte 44 die Seitenfläche des Werkzeughalters 3 mit einer abgeschrägten Seitenfläche versehen. Vorteilhaft wird jedoch eine nach oben und unten verschiebbare Keilplatte 44 eingesetzt, so dass von Zeit zu Zeit die Anlagenflächen zwischen der starren Matrize 5b und der beweglichen Matrize 7b nachgeschliffen werden können. Durch Anheben des Keils 44 nach oben (so wie in Fig. 4 dargestellt) wird die bewegliche Matrize 7b wieder spielfrei an der starren Matrize 5b und der geneigten Keilfläche des Keils 44 anliegen. Wie durch einen Vergleich der Fig. 4 mit der Fig. 3B ersichtlich, ist es nicht unbedingt notwendig im Falle der schrägen Anlageflächen der Matrizen 5b, 7b zusätzlich eine Fase oder Hinterschneidung vorzusehen (wie die Nummern 36 und 38 in Fig. 3B). In Ausgestaltung können jedoch entsprechende Fasen auch bei den schrägen Matrizen 5b, 7b vorgesehen sein.

Fig. 4A zeigt als Prinzip-Skizze die Ausführung eines Schlages auf die bewegliche Matrize 7b entweder aus der Normalrichtung mit dem vertikal verlaufenden Impulsvektor Pₙ. Oder der Schlag erfolgt geneigt zur Vertikalen unter dem Winkel γ mit der Impulsrichtung P_{γ}. In Ausgestaltung der Schlagvorrichtung, bei der auf den Matrizenblock 1 bzw. auf die bewegliche Matrize 7 ein Impulsschlag unter vertikaler Richtung ausgeführt wird, wird bei der beweglichen Matrize 7b von Fig. 4 ein schräger Impuls ausgeführt, wobei dann der Impulsvektor P_{γ} wieder parallel zur Bewegungsrichtung der Matrize 7b mit ihren schrägen Seitenwänden ist. Bei einem so angepassten Impulsvektor P_{γ} werden Reibungseffekte zwischen der beweglichen Matrize 7b und beispielsweise der Keilplatte 44 verringert.

Fig. 4B zeigt prinziphaft eine weitere Ausgestaltung, bei der das Dämpfungselement 19 ebenfalls unter einer Neigung γ zur Horizontalen steht, so dass beim Dämpfungsvorgang ebenfalls symmetrische Kräfte durch das Dämpfungselement 19 auf die bewegliche Matrize 7b wirken. Dabei liegt das Dämpfungselement 19 auf einem Träger 46 mit um γ geneigter Auflagefläche auf. Anstelle die Schlagimpulsrichtung P_{γ} um den Winkel γ gegenüber der Vertikalen zu neigen, kann auch der Matrizenblock 1 so um den Winkel γ schräg gestellt werden, dass zwar die bewegliche Matrize 7b eine vertikale Bewegung ausführt, diese aber geneigt zur Achse der Durchgänge 9, 11 verläuft.

Fig. 5 zeigt eine weitere Ausgestaltung einer starren oder beweglichen Matrize 5c, 7c, bei der in die Fassung 21d mehrere Hülsen 23c1, 23c2 und 23c3 eingesetzt sind. Die Druckbelastbarkeit an der Innenfläche der innersten Hülse 23c1 wird durch das Vorsehen eines mehrfachen Pressverbundes zwischen den Hülsen 23c1, 23c2, 23c3 und der Fassung 21d noch weiter erhöht. Darüber hinaus kann eine Erweiterung der Materialeigenschaften gegenüber Verwendung lediglich einer einzigen Hülse erreicht werden, so dass das Ergebnis des Trennvorgangs noch weiter verbessert wird, beispielsweise um die Deformation der Matrize 5c, 7c, des Stangenmaterials 40 weiter zu reduzieren oder um Stangenmaterial noch größeren Durchmessers oder noch höherer Härte zu trennen.

Fig. 6 zeigt eine weitere Ausführungsform einer starren oder beweglichen Matrize 5d, 7d, bei der die Wandstärke einer in eine Fassung 21d eingesetzten Hülse 23d entlang des Umfangs unterschiedlich ist. Hier hat die Hülse 23d einen ellipsenförmigen Außenumfang, während der Durchgang 9 rund ist. Dadurch wird die Druckbelastbarkeit an der Oberseite und Unterseite der Hülse 23d noch weiter erhöht.

Fig. 7 zeigt einen Querschnitt durch eine weitere Ausführungsform einer starren und/oder beweglichen Matrize 5e, 7e. Hier ist der Durchgang 9e U-förmig ausgebildet, so dass die Matrize zum trennen von U-förmigem Stangenmaterial optimiert ist. Da bei einem Schlag von oben (wie in Fig. 7 dargestellt) im Bereich der Ober- und Unterseite der Schenkel eine erhöhte Trennarbeit erforderlich ist, ist in diesen Bereichen die Hülse 23e entsprechend verstärkt.

Fig. 8 zeigt einen Querschnitt durch eine weitere Ausgestaltung der starren und/oder beweglichen Matrizen 5f, 7f, bei der die Außenform der Fassung 21f von der quadratischen Form abweicht. Hier dargestellt ist eine achteckige Außenform. Eine runde, eine andere n-eckige Außenform oder dergleichen sind ebenfalls möglich. Bei der acht-eckigen Außenform kann die Matrize bei Auftreten von Verschleißerscheinungen (beispielsweise an der Innenseite der Hülse 23e oder an den Anlageflächen zwischen starrer und beweglicher Matrize 5f, 7f) aus dem Werkzeughalter 3 entnommen und um einen Winkel (hier Vielfaches von 45°) verdreht wieder eingesetzt werden. Bevor also eine Matrize mit unsymmetrischen Verschleißerscheinungen komplett aufgearbeitet wird, kann diese durch Verdrehen und Nutzen von noch nicht abgenutzten Bereichen oder Flächen weiterverwendet werden.

Fig. 9 zeigt teilweise eine Schlagschneidemaschine 50, wie sie aus der EP 1 520 649 A2 bekannt ist. Mittels eines Beschleunigungsaggregats 56 wird eine Hammereinheit 52 mit einem Hammer 54 beschleunigt. Hier sind vom Beschleunigungsaggregat 56 das Umlenkrad 57 und die Antriebskette 60 sowie der an der Kette angeordnete Mitnehmer 58 dargestellt. Sobald die Hammereinheit 52 zum unteren Umkehrpunkt der Kette 60 gezogen wurde, löst sich der Mitnehmer 58 aus einer Nut im Hammer 54, so dass dieser geradlinig fliegt und auf eine bewegliche Matrize 7g im Matrizenblock 1g trifft. Die bewegliche Matrize 7g bewegt sich gegenüber der starren Matrize 5g und trennt ein Stangenmaterial 40. Bei dieser Ausführung des Matrizenblocks 1g verlaufen ein erster Durchgang 9g und ein zweiter Durchgang 11g unter einem Winkel γ durch die starre Matrize 5g und die bewegliche Matrize 7g. In Abwandlung zu der Anordnung von Fig. 4 führt hier die bewegliche Matrize 7g keine innerhalb des Matrizenblocks 1g schrägverlaufende Bewegung durch, sondern die Bewegung der Matrize 7g ist senkrecht bezüglich des Gesamtaufbaus des Matrizenblocks 1g. Die Kompensation der Kippung des Stangenmaterials 40 während des Schlagvorgangs wird hier erreicht, indem die Durchgänge geneigt durch die Matrizen 5g, 7g geführt werden.

### BEZUGSZEICHENLISTE

- 1: Matrizenblock
- 3: Werkzeughalter
- 5: starre Matrize
- 7: bewegliche Matrize
- 9: erster Durchgang
- 11: zweiter Durchgang
- 13: Eintrittseite
- 15: Austrittseite
- 17: Vertiefung
- 19: Dämpfungselement
- 21: erste Fassung
- 23: erste Hülse
- 25: zweite Fassung
- 27: zweite Hülse
- 29: Auswurfbahn
- 30: Zufuhrleitung
- 32: Umfangsnut
- 34: Auswurfrichtung
- 36: Fase
- 38: Fase
- 40: Stangenmaterial
- 42: abgetrenntes Werkstück
- 44: Keilplatte
- 46: Träger
- 50: Schlagschneidemaschine
- 52: Hammereinheit
- 54: Hammer
- 56: Beschleunigungsaggregat
- 57: Umlenkrad
- 58: Mitnehmer
- 60: Antriebskette
- α, β, γ: Winkel

## Patentansprüche

1. Matrizenelement (5, 7) für eine Schneideeinheit (1) einer Schlagschneidevorrichtung (50), mit einem Außenelement (21, 25) und einem Innenelement (23, 27), **dadurch gekennzeichnet, dass** das Außenelement zumindest ein umlaufend geschlossenes Innenelement fasst.

2. Matrizenelement nach Anspruch 1, wobei das Außenelement (21, 25) und das zumindest eine Innenelement (23, 27) einen Pressverband bilden.

3. Matrizenelement nach Anspruch 1 oder 2, wobei das zumindest eine Innenelement (23, 27) und das Außenelement (21, 25) einen Schrumpfverband bilden.

4. Matrizenelement nach Anspruch 1, 2 oder 3, wobei das Innenelement (23, 27) und das Außenelement (21, 25) aus verschiedenen Materialien ausgebildet sind.

5. Matrizenelement nach einem der vorhergehenden Ansprüche, wobei das Innenelement (23, 27) hülsen- oder buchsenartig ausgebildet ist.

6. Matrizenelement nach einem der vorhergehenden Ansprüche, wobei das Innenelement (23a, 27a) zumindest teilweise konisch ausgebildet ist.

7. Matrizenelement nach einem der vorhergehenden Ansprüche, wobei zwischen Innenelement (23, 27) und Außenelement (21, 25) eine zumindest teilweise umlaufend ausgebildete Nut (32) ausgebildet ist

8. Matrizenelement nach einem der vorhergehenden Ansprüche, wobei die Innenfläche des Durchgangs (9, 11) für ein zu trennendes Werkstück (40) vollständig durch das Innenelement (23, 27) ausgebildet ist.

9. Matrizenelement nach einem der vorhergehenden Ansprüche, wobei die Wandstärke des zumindest einen Innenelements in Umfangsrichtung unterschiedlich stark ausgebildet ist, insbesondere das zumindest eine Innenelement (23d) einen elliptischen Außenumfang aufweist.

10. Matrizenelement nach einem der vorhergehenden Ansprüche, wobei das Innenelement (27) im Auswurfbereich an der unteren Innenseite (29) aufgeweitet ist.

11. Matrizenelement nach einem der vorhergehenden Ansprüche, wobei das Außenelement (21d) mehrere schalenartig eingesetzte Innenelemente (23d1-23d3) fasst.

12. Matrizenelement nach Anspruch 11, wobei zumindest eines der Innenelemente (23d1-23d3) aus einem anderen Material als die anderen Innelemente ausgebildet ist.

13. Matrizenelement nach einem der vorhergehenden Ansprüche, wobei die Öffnungsweite des Durchgangs (9, 11) zur Aufnahme eines Werkstücks zur Aus- oder Eintrittsseite hin in Schlagrichtung und/oder entgegen der Schlagrichtung zunimmt.

14. Matrizenelement (5, 7), insbesondere nach einem der vorhergehenden Ansprüche, mit einem Außenelement (21, 25) und zumindest einem Innenelement (23, 27), **dadurch gekennzeichnet, dass** das Außenelement (21, 25) und das zumindest eine Innenelement (23, 27) eine Schrumpfpassung oder einen Schrumpfverband bilden.

15. Schneideeinheit (1) für eine Schlagschneidevorrichtung (50) mit zumindest zwei Matrizenelementen (5, 7) zum Aufnehmen eines zu trennenden Werkstücks (50), wobei zumindest eines der Matrizenelemente (7) relativ zum anderen Matrizenelement (5) beweglich gelagert ist und wobei zumindest eines der Matrizenelemente nach einem der vorhergehenden Ansprüche ausgebildet ist.

16. Schneideeinheit nach Anspruch 15, wobei das bewegliche Matrizenelement (7) und zumindest eines der festen Matrizenelemente (5) aus einem Außenelement (21, 25) und zumindest einem Innenelement (23, 27) ausgebildet ist.

17. Schneideeinheit (1) für eine Schlagschneidevorrichtung (50), insbesondere nach einem der Ansprüche 15 oder 16, mit zumindest zwei Matrizenelementen (5, 7) mit Durchgängen (9, 11) zum Aufnehmen eines zu trennenden Werkstücks (40), wobei zumindest eines der Matrizenelemente (7) relativ zum anderen Matrizenelement (5) beweglich gelagert ist, **dadurch gekennzeichnet, dass** bei allen oder zumindest einem der Matrizenelemente (5b, 7b; 5g, 7g) die Achse des Durchgangs (9, 11) geneigt (γ) ist gegenüber der Senkrechten zur Verschiebungsrichtung des beweglichen Matrizenelements (7b; 7g).

18. Schneideeinheit nach Anspruch 17, wobei die Neigung (γ) im Bereich von 0,05° bis 5°, vorzugsweise im Bereich von 0,5° bis 3° liegt, besonders bevorzugt im Bereich von 1° bis 2°.

19. Schneideeinheit nach Anspruch 17 oder 18, wobei die Anlage- oder Verschiebungsfläche des beweglichen Matrizenelements (7b) an dem zumindest einen festen Matrizenelements (5b) geneigt (γ) ist gegenüber dem Lot zur Längsachse des Durchgangs (9, 11) zur Aufnahme des zu trennenden Werkstücks (40).

20. Schneideeinheit nach Anspruch 19, wobei die Gegenflächen des beweglichen und/oder des zumindest einen festen Matrizenelements (7b) parallel zur geneigten Anlage- oder Verschiebungsfläche verlaufen.

21. Schneideeinheit nach Anspruch 19 oder 20, wobei die Gegenfläche oder Gegenflächen an zumindest einem Stützelement (44) mit gepaarter Neigungsfläche anliegt.

22. Schneideeinheit nach einem der Ansprüche 17 bis 21, wobei zumindest eine der Achsen der Durchgänge (9, 11) geneigt (γ) ist gegenüber der Senkrechten der Verschiebungsrichtung des beweglichen Matrizenelements (7g).

23. Schneideeinheit nach Anspruch 22, wobei zumindest eine der Achsen der Durchgänge (9, 11) geneigt durch die Schneideeinheit (1) verläuft.

24. Schneideeinheit (1) nach einem der Ansprüche 15 bis 23, **dadurch gekennzeichnet, dass** zwischen einem Träger, insbesondere einem in der Schneideeinheit ausgebildeten Träger (46), und dem zumindest einen beweglichen Matrizenelement (7), gegenüberliegend zur Aufschlagseite des beweglichen Matrizenelements, eine Dämpfungseinrichtung (19) angeordnet ist.

25. Schneideeinheit nach Anspruch 24, **dadurch gekennzeichnet, dass** die Dämpfungseinrichtung (19) zumindest eine Ringfeder oder Reibfeder aufweist.

26. Schlagschneidevorrichtung (50) mit einer Schneideeinheit (1) und/oder einem Matrizenelement (5, 7) nach einem der vorhergehenden Ansprüche, wobei die Schlagschneidevorrichtung ein Schlagelement (54) zum Ausführen eines Schlages auf das bewegliche Matrizenelement (7) aufweist.

27. Schlagschneidevorrichtung nach Anspruch 26, wobei die Schlagrichtung des Schlagelements (54) geneigt ist zur Senkrechten der Durchgangsachse (9, 11) für ein zu trennendes Werkstück (40) in zumindest einem der Matrizenelemente (5, 7).

28. Matrizenelement mit mehrfach symmetrischer Außenform, wobei die Außenform in verschiedenen Einbaulagen in eine Schneideeinheit einsetzbar ist.

29. Matrizenelement nach Anspruch 28, wobei eine Vielzahl von in einem Winkel zueinander an der Außenseite der Außenform angeordneter Schlagflächen vorgesehen ist.

30. Matrizenelement nach Anspruch 28 oder 29, wobei das Matrizenelement weiterhin nach einem der Ansprüche 1 bis 14 ausgebildet ist.
